# FASCICULE DE BREVET EUROPEEN

(11) **EP 1 917 222 B1**
(45) Date de publication et mention de la délivrance du brevet: **11.03.2009**
(21) Numéro de dépôt: 06841980.3
(22) Date de dépôt: 10.08.2006
(51) Int. Cl.: C03C 17/36

(54) **EMPILEMENT DE COUCHES MINCES A BASSE EMISSIVITE (LOW-E) AVEC COUCHES INTERMEDIAIRES ANTIDIFFUSION**
DÜNNE LOW-E-BESCHICHTUNGSSYSTEME MIT STREUSCHUTZZWISCHENSCHICHTEN
LOW EMISSIVITY (LOW-E) THIN COATING STACKS WITH INTERMEDIATE ANTIDIFFUSION LAYERS

(30) Priorité: 23.08.2005 DE 102005039707
(43) Date de publication de la demande: 07.05.2008
(73) Titulaire: SAINT-GOBAIN GLASS FRANCE, 92400 Courbevoie (FR)
(72) Inventeur: IHLO, Lars, 04889 Pfluckuff (DE); SCHMIDT, Uwe, 04895 Falkenberg (DE); COMTESSE, Ralf, 66787 Wadgassen (DE); SCHICHT, Heinz, D-06925 Bethau (DE)
(74) Mandataire: Jamet, Vincent
(86) Numéro de dépôt international: PCT/FR2006/050797
(87) Numéro de publication internationale: WO 2007/042688

(56) Documents cités:
- EP-A- 1 538 131
- EP-A2- 0 678 484
- EP-A2- 1 630 142
- WO-A2-20/04013059
- FR-A1- 2 641 271
- US-A1- 2005 145 480

## Description

L'invention concerne un système de couches à basse émissivité et haute résistance thermique pour des substrats transparents, en particulier pour des vitres, qui présente les caractéristiques du préambule de la revendication 1.

Il comprend un revêtement antireflet inférieur qui présente une couche fortement réfringente avec notamment une couche en TiO₂, Nb₂O₅ ou TiNbOₓ ainsi qu'une couche de mouillage essentiellement constituée de ZnO, à laquelle se raccorde une couche fonctionnelle à base d'argent, avec une couche de barrière au-dessus de la couche d'argent, un revêtement supérieur antireflet constitué d'une couche ou de plusieurs couches partielles et un revêtement de recouvrement constitué d'une couche ou de plusieurs couches partielles, une autre couche d'oxyde métallique qui sert de couche anti-diffusion étant disposée dans le revêtement antireflet inférieur de base entre la couche à haute réfringence et la couche de ZnO.

Des systèmes de couches qui conviennent pour les opérations de bombage et/ou de trempe thermique de vitres et dans lesquels la couche de mouillage à base de ZnO est immédiatement adjacente à une couche de TiO₂ sont divulgués par exemple par le document DE 197 26 966 et le document DE 198 50 023. Il s'est cependant avéré qu'après la trempe, la proportion de lumière diffusée par ces systèmes de couches est relativement élevée. Comme cause probable, on suppose dans le document EP 1 538 131 lors de l'opération de trempe, des processus de diffusion par lesquels la couche de TiO₂ est détruite ont lieu à la surface frontière entre TiO₂ et ZnO. On peut également poser l'hypothèse qu'à haute température, du Zn₂TiO₄ se forme par des processus de diffusion sur la surface frontière et qu'à l'état cristallin, il peut être la cause de la forte proportion de lumière diffusée.

Pour inhiber ces processus de diffusion, le document EP 1 538 131 propose de disposer une couche anti-diffusion en SnO₂ entre la couche à haute réfringence et la couche de ZnO. La couche à haute réfringence sera ainsi protégée lors de l'opération de trempe, de sorte que le haut indice de réfraction de cette couche pourra être utilisé à plein même après l'opération de trempe.

Bien que l'on observe une nette diminution de la proportion de lumière diffusée lorsqu'on dispose une couche anti-diffusion en SnO₂, cette dernière est cependant toujours assez élevée. L'émissivité n'atteint pas davantage les basses valeurs souhaitées.

L'invention est basée sur un système de couches à haute résistance thermique qui a la structure fondamentale mentionnée plus haut. Le problème à la base de l'invention est d'améliorer encore les propriétés d'un tel système de couches et en particulier de diminuer encore la proportion de lumière diffusée après l'opération de trempe, d'augmenter encore la transmission dans le domaine visible, de diminuer encore la résistance superficielle et donc les valeurs d'émission et d'atteindre des valeurs aussi élevées que possible de la réflexion dans la plage du rayonnement thermique.

Selon l'invention, ce problème est résolu avec les caractéristiques indiquées dans la revendication 1.

Le système de couches à basse émissivité et haute résistance thermique pour des substrats transparents, en particulier pour des vitres, selon l'invention présente un revêtement antireflet inférieur qui présente une couche à haute réfringence, une couche de mouillage constituée essentiellement de ZnO à laquelle se raccorde une couche fonctionnelle à base d'argent, une couche barrière au-dessus de la couche fonctionnelle, un revêtement antireflet supérieur constitué d'une couche ou de plusieurs couches partielles et un revêtement de recouvrement constitué d'une couche ou de plusieurs couches partielles, une autre couche d'oxyde métallique qui sert de couche anti-diffusion étant disposée dans le revêtement antireflet inférieur entre la couche à haute réfringence et la couche de mouillage. La couche anti-diffusion située entre la couche à haute réfringence et la couche de mouillage est une couche d'oxyde mixte d'une épaisseur d'au moins 0,5 nm, en NiCrOₓ ou InSnOₓ (ITO).

Par « couche à haute réfringence » au sens de la présente invention, on entend un couche dont l'indice optique est supérieur ou égal à 2,2. Cette couche est, de préférence, une couche non nitrurée, et en particulier une couche d'oxyde.

Des compositions préférées du système de couches ainsi que les plages d'épaisseur préférées des couches individuelles ressortent des revendications secondaires et des exemples de réalisation qui suivent.

En particulier, la couche à haute réfringence est, de préférence, en TiO₂, Nb₂O₅ ou TiNbOₓ.

Par ailleurs, la couche à haute réfringence est disposée directement sur la surface du verre ou une couche diélectrique dont l'indice de réfraction, n, est plus petit - c'est-à-dire est inférieur à 2,2 tout en étant, de préférence supérieur à 1,8 - que l'indice de réfraction de la couche à haute réfringence qui suit est disposée entre la surface du verre et la couche à haute réfringence, en particulier lorsque la couche à haute réfringence est en TiO₂, Nb₂O₅ ou TiNbOₓ. Dans ce cas, cette couche diélectrique disposée entre la surface du verre et la couche à haute réfringence est, de préférence, constituée de SnO₂, de ZnO, de SiO₂ ou de Si₃N₄.

La couche barrière est, de préférence, une couche métallique ou faiblement hydrogénée d'un alliage de titane constitué de 50 à 80 % en poids de Ti et de 20 à 50 % en poids d'Al.

Dans une variante particulière le système de couches à basse émissivité et haute résistance thermique pour des substrats transparents, en particulier pour des vitres, selon l'invention présente un revêtement antireflet inférieur qui présente une couche à haute réfringence, une couche de mouillage constituée essentiellement de ZnO à laquelle se raccorde une couche fonctionnelle à base d'argent, une couche barrière au-dessus de la couche fonctionnelle, un revêtement antireflet supérieur constitué d'une couche ou de plusieurs couches partielles et un revêtement de recouvrement constitué d'une couche ou de plusieurs couches partielles, une autre couche d'oxyde métallique qui sert de couche anti-diffusion étant disposée dans le revêtement antireflet inférieur entre la couche à haute réfringence et la couche de mouillage, la couche anti-diffusion située entre la couche à haute réfringence et la couche de mouillage étant une couche d'oxyde mixte d'une épaisseur d'au moins 0,5 nm, en NiCrOₓ ou InSnOₓ (ITO).

Dans une variante avantageuse le système de couches selon l'invention présente la structure de couches suivante : verre / Sn0₂ / TiO₂ / NiCrOₓ / ZnO:Al / Zn / Ag / TiAl (TiH₁) / ZnO:Al / Si₃N₄ / ZnSnSbOₓ / Zn₂TiO₄

Dans une autre variante avantageuse le système de couches selon l'invention présente la structure de couches suivante : verre / SnO₂ / TiO₂ / ITO / ZnO:Al / Zn / Ag / TiAl (TiH₁) / ZnO:Al / Si₃N₄ / ZnSnSbOₓ / Zn₂TiO₄.

L'invention est décrite plus en détail à l'aide de deux exemples de réalisation qui sont comparés à deux exemples comparatifs de l'état de la technique. Comme les dispositions selon l'invention optimisent en particulier les propriétés optiques et énergétiques, l'évaluation de la qualité des couches est basée fondamentalement sur les mesures de la lumière diffusée, de la résistance superficielle et de l'émissivité. Par conséquent, pour évaluer les propriétés des couches, on réalise sur les vitres revêtues les mesures et tests donnés ci-dessous.
A. Mesure de l'épaisseur (d) de la couche d'argent par analyse de fluorescence de rayons X.
B. Mesure de la lumière diffusée (H) en % à l'aide de l'appareil de mesure de lumière diffusée de la firme Gardner.
C. Mesure de la transmission (T) en % à l'aide de l'appareil de mesure de la firme Gardner.
D. Mesure de la résistance électrique superficielle(R) en Ω/□ à l'aide de l'appareil FPP 5000 Veeco Instr. et de l'appareil de mesure manuelle SQOHM-1.
E. Mesure de l'émissivité (En) en % avec l'appareil de mesure MK2 de la firme Sten Löfring.

Après la mesure de l'émissivité, on calcule les valeurs d'émissivité à l'aide des valeurs de résistance superficielle par la formule E*ₙ = 0,0106 × R (voir H.-J. Gläser : "Dünnfilmtechnologie auf Flachglas", Verlag Karl Hofmann 1999, page 144) et les valeurs de mesure Eₙ sont comparées aux valeurs calculées E^{*}ₙ. Plus la différence entre les valeurs de mesure Eₙ et les valeurs calculées E^{*}ₙ est petite, meilleure est la stabilité thermique du système de couches.

Pour chacune des mesures, on utilise des éprouvettes de dimensions 40 × 50 cm découpées dans la partie centrale de vitre revêtue d'une épaisseur de 4 mm. Les éprouvettes sont chauffées à une température de 720 à 730°C dans un four de trempe de la firme EFKO type 47067 et ensuite trempées thermiquement par brusque refroidissement à l'air. Toutes les éprouvettes subissent de cette manière la même sollicitation thermique.

Il faut par ailleurs indiquer que le système de couches selon l'invention n'atteint ses meilleures valeurs en termes d'isolation thermique, de réflexion de l'infrarouge et de transmission de la lumière sur des vitres qu'après le traitement thermique des substrats sur lesquels il est déposé (trempe). La couche anti-diffusion joue également un rôle essentiel lors des traitements thermiques. Cependant, le système de couches décrit ici peut être utilisé commercialement avec de légers défauts d'isolation thermique et de transmission de lumière même sans avoir été traité thermiquement, et donc en particulier sur des vitres non trempées, sur des vitres en matière synthétique et également sur des films. Les exemples de réalisation ci-après concernent cependant tous l'utilisation du système de couches sur des substrats constitués de vitres en verre trempées thermiquement.

### Exemple comparatif 1

Sur une installation industrielle de revêtement en continu, à l'aide du procédé de pulvérisation cathodique réactive assistée par champ magnétique, on dépose un système de couches à basse émissivité qui correspond à l'état de la technique (DE 102 35 154 B4) sur des vitres en verre flotté d'une épaisseur de 4 mm, les chiffres qui précèdent les symboles chimiques indiquant pour chaque couche l'épaisseur en nm :
Verre / 18 SnO₂ / 10 TiO₂ / 6 ZnO:Al / 1,5 Zn / 11,6 Ag / 2 TiAl(TiH₁) / 5 ZnO:Al / 30 Si₃N₄ / 3 ZnSnSbOₓ / 2 Zn₂ TiO₄

La couche de TiO₂ est déposée par pulvérisation de deux cibles tubulaires en céramique de TiOₓ dans un gaz de travail constitué d'un mélange d'Ar et d'O₂, l'addition d'O₂ étant d'environ 3 % en volume. Les couches de ZnO:Al sont déposées par pulvérisation d'une cible métallique en ZnAl à 2 % en poids d'Al. La mince couche métallique de Zn est déposée en conditions non réactives à partir du même matériau de cible. La couche barrière disposée sur la couche d'argent est déposée par pulvérisation réactive d'une cible métallique dans un mélange de gaz de travail d'Ar/H₂ (90/10 % en volume), la cible contenant 64 % en poids de Ti et 36 % en poids d'Al. Lors de la pulvérisation réactive, il se forme de l'hydrure de titane dont le degré d'hydrogénation ne peut être défini que difficilement. Si la liaison est stoechiométrique, la valeur de 1 est comprise entre 1 et 2.

La couche antireflet supérieure est déposée par pulvérisation réactive d'une cible de Si dans un mélange de gaz de travail d'Ar/N₂.

La couche de recouvrement inférieure en ZnSnSbOₓ est réalisée à partir d'une cible métallique constituée d'un alliage de ZnSnSb qui contient 68 % en poids de Zn, 30 % en poids de Sn et 2 % en poids de Sb, dans un gaz de travail d'Ar/O₂, et la couche de recouvrement supérieure (couche finale) est également déposée par pulvérisation réactive d'une cible métallique constituée d'un alliage de ZnTi à 73 % en poids de Zn et 27 % en poids de Ti.

Sur les éprouvettes trempées et revêtues de cet exemple comparatif, on détermine les valeurs suivantes:

| | |
|---|---|
| Epaisseur d de la couche d'argent | 11,6 nm |
| Lumière diffusée H | 0,70 % |
| Transmission T | 87,2 % |
| Résistance superficielle R | 3,75 Ω/□ |
| Emissivité Eₙ mesurée | 9,65 % |
| Emissivité E*ₙ calculée | 3,97 % |
| Eₙ - E*ₙ | 5,68 % |

La proportion de lumière diffusée, qui est de 0,7 %, dépasse nettement la limite encore tolérable de 0,5 %. En outre, on constate une forte différence entre la valeur mesurée et la valeur calculée de l'émissivité. Sous éclairage oblique par une lampe halogène, on voit un fin voile (trouble nuageux).

### Exemple comparatif 2

Pour poursuivre la comparaison, on dote le système de couches du document EP 1 538 131 enseigné dans l'exemple comparatif 1 d'une couche anti-diffusion en SnO₂ entre la couche de TiO₂ et la couche de ZnO. Ce système de couches présente donc la structure suivants :
Verre / 18 SnO₂ / 10 TiO₂ / 5 SnO₂ / 6 ZnO:Al / 1,5 Zn / 11,6 Ag / 2 TiAl(TiH₁) / 5 ZnO:Al / 30 Si₃N₄ / 3 ZnSnSbOₓ / 2 Zn₂TiO₄

Les mesures réalisées sur les éprouvettes trempées thermiquement dans les mêmes conditions que dans l'exemple comparatif 1 donnent les valeurs suivantes:

| | |
|---|---|
| Epaisseur d de la couche d'argent | 11,7 nm |
| Lumière diffusée H | 0,50 % |
| Transmission T | 87,0 % |
| Résistance superficielle R | 3,1 Ω/□ |
| Emissivité Eₙ mesurée | 7,2 % |
| Emissivité E*ₙ calculée | 3,3 |
| Eₙ - E*ₙ | 3,9 % |

Grâce à l'agencement de la couche anti-diffusion en SnO₂, la proportion de lumière diffusée a nettement diminué par rapport à l'exemple comparatif précédent, mais elle est encore de 0,5 %. On observe également un rapprochement entre la valeur mesurée et la valeur calculée de l'émissivité. A 3,9 %, la différence est encore relativement grande, et il faut en conclure que la couche d'Ag a encore subi une dégradation considérable lors de l'opération de trempe.

L'insertion de la couche de SnO₂ a pour le reste rendu globalement le système de couches plus malléable, ce qui s'exprime par une plus grande sensibilité aux griffes et une plus grande tendance à.des dommages de surface lors des opérations de lavage.

### Exemple de réalisation 1

Sur la même installation de revêtement que celle utilisée pour les exemples comparatifs 1 et 2, on réalise un système de couches modifié selon l'invention, qui présente la structure suivante :
Verre / 18 SnO₂ / 10 TiO₂ / 2,5 NiCrOₓ / 6 ZnO:Al / 1,5 Zn / 11,6 Ag / 2 TiAl (TiH₁) / 7 ZnO:Al / 30 Si₃N₄ / 3 ZnSnSbOₓ / 2 Zn₂TiO₄

La modification par rapport à l'exemple comparatif 2 réside en ce qu'au lieu de la couche de SnO₂, on insère une couche anti-diffusion en NiCrOₓ entre la couche de TiO₂ et la couche de ZnO. La couche de NiCrOₓ sous-oxydée est déposée par pulvérisation d'une cible plane métallique en mode courant continu et dans une atmosphère d'Ar/O₂, la teneur en O₂ dans le gaz de travail étant d'environ 30 % en volume.

Les éprouvettes sont trempées de la même manière que les éprouvettes des exemples comparatifs. Les mesures réalisées sur les éprouvettes trempées et revêtues donnent les valeurs suivantes:

| | |
|---|---|
| Epaisseur d de la couche d'argent | 11,5 nm |
| Lumière diffusée H | 0,25 % |
| Transmission T | .89,1% |
| Résistance superficielle R | 3,68 Ω/□ |
| Emissivité Eₙ mesurée | 4,3 %(de 4,0 à 4,6) |
| Emissivité E*ₙ calculée | 3,9 % |
| Eₙ - E*ₙ | 0,4 % |

La proportion de la lumière diffusée est donc descendue à la moitié de celle de l'exemple comparatif 2. De même, la différence entre l'émissivité mesurée et l'émissivité calculée est devenue nettement plus petite, ce qui permet de conclure que l'insertion de la couche de NiCrOₓ a rendu la couche d'argent nettement plus stable lors de l'opération de trempe.

Le comportement du système de couches en utilisation est considérablement amélioré, ce qui s'exprime par une sensibilité nettement moindre aux griffes. Même lorsque les durées de trempe sont prolongées de 20 %, on n'observe pas d'effet défavorable. Cela signifie que la résistance du système de couches à la température a encore été améliorée. Le système de couches est optiquement brillant et même sous éclairage oblique à l'aide d'une lampe à halogène, on ne voit aucun voile (léger nuage).

### Exemple de réalisation 2

Sur la même installation de revêtement que pour les exemples précédents, on réalise un système de couches modifié selon l'invention, de structure suivante :
Verre / 18 SnO₂ / 6 TiO₂ / 2,5 ITO / 6 ZnO:Al / 1,5 Zn / 11,6 Ag / 2 TiAl (TiH₁) / 7 ZnO:Al / 30 Si₃N₄ / 3 ZnSnSbOₓ / 2 Zn₂TiO₄

La mince couche anti-diffusion d'ITO est déposée par pulvérisation d'une cible plane en céramique dans une atmosphère d'argon, sans addition d'oxygène.

Après le traitement thermique et de trempe qui s'effectuent dans les mêmes conditions que pour les exemples précédents, on détermine sur les éprouvettes les valeurs suivantes:

| | |
|---|---|
| Epaisseur d de la couche d'argent | 11,6 nm |
| Lumière diffusée H | 0,25 % |
| Transmission T | 89,1 % |
| Résistance superficielle R | 3,67 Ω/□ |
| Emissivité Eₙ mesurée | 4,4 %(de 4,2 à 4,6) |
| Emissivité E*ₙ calculée | 3,9 % |
| Eₙ - E*ₙ | 0,5 % |

La comparaison avec l'exemple comparatif 2 montre que de même, une couche anti-diffusion selon l'invention en ITO, donne des résultats meilleurs qu'une couche anti-diffusion en SnO₂.

## Revendications

1. Système de couches à basse émissivité et haute résistance thermique pour des substrats transparents, en particulier pour des vitres, qui présente un revêtement antireflet inférieur qui présente une couche à haute réfringence, une couche de mouillage constituée essentiellement de ZnO à laquelle se raccorde une couche fonctionnelle à base d'argent, une couche barrière au-dessus de la couche fonctionnelle, un revêtement antireflet supérieur constitué d'une couche ou de plusieurs couches partielles et un revêtement de recouvrement constitué d'une couche ou de plusieurs couches partielles, une autre couche d'oxyde métallique qui sert de couche anti-diffusion étant disposée dans le revêtement antireflet inférieur entre la couche à haute réfringence et la couche de mouillage, **caractérisé en ce que** la couche anti-diffusion située entre la couche à haute réfringence et la couche de mouillage est une couche d'oxyde mixte d'une épaisseur d'au moins 0,5 nm, en NiCrOₓ ou InSnOₓ (ITO).

2. Système de couches selon la revendication 1, **caractérisé en ce que** la couche à haute réfringence est en TiO₂, Nb₂O₅ ou TiNbOₓ.

3. Système de couches selon la revendication 1 ou 2, **caractérisé en ce que** la couche à haute réfringence est disposée directement sur la surface du verre.

4. Système de couches selon la revendication 1 ou 2, **caractérisé en ce qu'**une couche diélectrique dont l'indice de réfraction, n, est plus petit que l'indice de réfraction de la couche à haute réfringence qui suit est disposée entre la surface du verre et la couche à haute réfringence.

5. Système de couches selon la revendication précédente, **caractérisé en ce que** la couche diélectrique disposée entre la surface du verre et la couche à haute réfringence est constituée de SnO₂, de ZnO, de SiO₂ ou de Si₃N₄.

6. Système de couches selon l'une des revendications précédentes, **caractérisé en ce que** la couche barrière est une couche métallique ou faiblement hydrogénée d'un alliage de titane constitué de 50 à 80 % en poids de Ti et de 20 à 50 % en poids d'Al.

7. Système de couches selon l'une des revendications 1, 2 et 4 à 6, **caractérisé par** la structure de couches suivante : verre / SnO₂ / TiO₂ / NiCrOₓ / ZnO:Al / Zn / Ag / TiAl (TiH₁) / ZnO:Al / Si₃N₄ / ZnSnSbOₓ / Zn₂TiO₄

8. Système de couches selon l'une des revendications 1, 2 et 4 à 6, **caractérisé par** la structure de couches suivante : verre / SnO₂ / TiO₂ / ITO / ZnO:Al / Zn / Ag / TiAl (TiH₁) / ZnO:Al / Si₃N₄ / ZnSnSbOₓ / Zn₂TiO₄.

## Claims

1. A heat-resistant low-E multilayer system for transparent substrates, in particular for window panes, which has a lower antireflection coating having a high-refringence layer, a wetting layer consisting essentially of ZnO to which a silver-based functional layer is joined, a barrier layer over the functional layer, an upper antireflection coating consisting of a layer or several partial layers and a cover coating consisting of a layer or several partial layers, another metal oxide layer that serves as antiscattering layer being placed in the lower antireflection coating between the high-refringence layer and the wetting layer, **characterized in that** the antiscattering layer located between the high-refringence layer and the wetting layer is a mixed oxide layer with a thickness of at least 0.5 nm, made of NiCrOₓ or InSnOₓ (ITO).

2. The multilayer system as claimed in claim 1, **characterized in that** the high-refringence layer is made of TiO₂, Nb₂O₅ or TiNbOₓ.

3. The multilayer system as claimed in claim 1 or 2, **characterized in that** the high-refringence layer is placed directly on the surface of the glass.

4. The multilayer system as claimed in claim 1 or 2, **characterized in that** a dielectric layer, the refractive index n of which is smaller than the refractive index of the high-refringence layer that follows, is placed between the surface of the glass and the high-refringence layer.

5. The multilayer system as claimed in the preceding claim, **characterized in that** the dielectric layer placed between the surface of the glass and the high-refringence layer consists of SnO₂, ZnO, SiO₂ or Si₃N₄.

6. The multilayer system as claimed in one of the preceding claims, **characterized in that** the barrier layer is a metal layer or a layer of a lightly hydrogenated titanium alloy consisting of 50 to 80 wt% Ti and 20 to 50 wt% Al.

7. The multilayer system as claimed in one of claims 1, 2 and 4 to 6, **characterized by** the following multilayer structure:
glass/SnO₂/TiO₂/NiCrOₓ/ZnO:Al/Zn/Ag/TiAl (TiH_{ℓ}) /ZnO :Al/Si₃ N₄/ZnSnSbOₓ/Zn₂TiO₄.

8. The multilayer system as claimed in one of claims 1, 2 and 4 to 6, **characterized by** the following multilayer structure:
glass/SnO₂/TiO₂/ITO/ZnO:Al/Zn/Ag/TiAl (TiH_{ℓ}) /ZnO:Al/Si₃N₄/ ZnSnSbOₓ/Zn₂TiO₄.

## Patentansprüche

1. Schichtsystem mit niedrigem Emissionsvermögen und hoher Wärmebeständigkeit für transparente Substrate, insbesondere Glasscheiben, das eine untere Antireflexbeschichtung, die eine Schicht mit hoher Brechkraft, eine im Wesentlichen aus ZnO gebildete Haftschicht, an welche sich eine funktionelle Schicht auf Silberbasis anschließt, und eine Barriereschicht auf der funktionellen Schicht aufweist, eine obere Antireflexbeschichtung, die aus einer Schicht oder mehreren Teilschichten gebildet ist, und eine Deckbeschichtung, die aus einer Schicht oder mehreren Teilschichten gebildet ist, aufweist, wobei eine weitere Metalloxidschicht, die als Diffusionssperrschicht dient, in der unteren Antireflexbeschichtung zwischen der Schicht mit hoher Brechkraft und der Haftschicht angeordnet ist, **dadurch gekennzeichnet, dass** die Diffusionssperrschicht, die sich zwischen der Schicht mit hoher Brechkraft und der Haftschicht befindet, eine Mischoxidschicht aus NiCrOₓ oder InSnOₓ (ITO) mit einer Dicke von mindestens 0,5 nm ist.

2. Schichtsystem nach Anspruch 1, **dadurch gekennzeichnet, dass** die Schicht mit hoher Brechkraft aus TiO₂, Nb₂O₅ oder TiNbOₓ ist.

3. Schichtsystem nach Anspruch 1 oder 2, **dadurch gekennzeichnet, dass** die Schicht mit hoher Brechkraft direkt auf der Glasoberfläche angeordnet ist.

4. Schichtsystem nach Anspruch 1 oder 2, **dadurch gekennzeichnet, dass** eine dielektrische Schicht, deren Brechungsindex n kleiner als der Brechungsindex der folgenden Schicht mit hoher Brechkraft ist, zwischen der Glasoberfläche und der Schicht mit hoher Brechkraft angeordnet ist.

5. Schichtsystem nach dem vorhergehenden Anspruch, **dadurch gekennzeichnet, dass** die dielektrische Schicht, die zwischen der Glasoberfläche und der Schicht mit hoher Brechkraft angeordnet ist, aus SnO₂, ZnO, SiO₂ oder Si₃N₄ gebildet ist.

6. Schichtsystem nach einem der vorhergehenden Ansprüche, **dadurch gekennzeichnet, dass** die Barriereschicht eine Metallschicht oder eine Schicht aus einer leicht hydrierten Titanlegierung, die aus 50 bis 80 Gew.-% Ti und 20 bis 50 Gew.-% Al gebildet ist, ist.

7. Schichtsystem nach einem der Ansprüche 1, 2 und 4 bis 6, das **gekennzeichnet ist durch** folgenden Schichtaufbau:
Glas/SnO₂/TiO₂/NiCrOₓ/ZnO:Al/Zn/Ag/TiAl(TiHₗ)/ZnO:Al/Si₃N₄/ ZnSnSbOₓ/Zn₂TiO₄.

8. Schichtsystem nach einem der Ansprüche 1, 2 und 4 bis 6, das **gekennzeichnet ist durch** folgenden Schichtaufbau: Glas/
SnO₂/TiO₂/ITO/ZnO:Al/Zn/Ag/TiAl(TiH₁)/ZnO:Al/Si₃N₄/ZnSnSbOₓ/ Zn₂TiO₄.
